# EUROPEAN PATENT SPECIFICATION

(11) **EP 0 882 386 B1**
(45) Date of publication and mention of the grant of the patent: **04.09.2002**
(21) Application number: 98202874.8
(22) Date of filing: 26.02.1993
(51) Int. Cl.: A01D 34/66, A01D 57/30

(54) **A combination of mowers for grass crops**
Kombination von Mähmaschinen für Gewächs
Combinaison de faucheuses de végétaux

(30) Priority: 28.02.1992 DK 25592
(43) Date of publication of application: 09.12.1998
(62) Divisional of application: 93610016.3
(73) Proprietor: JF-FABRIKEN - J. FREUDENDAHL A/S, DK-6400 Sonderborg (DK)
(72) Inventor: Freudendahl, Jan, 6400 Sonderborg (DK)
(74) Representative: Jorgensen, Bjorn Barker

(56) References cited:
- EP-A- 0 089 257
- EP-A- 0 316 896
- EP-A- 0 332 552
- EP-A- 0 342 700
- EP-A- 0 521 812
- DE-A- 2 717 900
- FR-A- 2 535 154

## Description

In the harvesting of grass crops by mower, i.e. disc mowing machines, the cut crop is discharged in parallel windrows which in a subsequent operation are collected and processed by a pick-up attachment, e.g. a field chopper, designed as an exact cutter with an associated rotary collecting rake, and transferred to a collecting truck by a conveyor.

The parallel windrows have traditionally been discharged equidistantly, corresponding to the pass width of the mower, and during the following picking-up the field is run over according to the same principle as practised for the windrowing whereby one windrow at a time has been collected.

In order to increase the working capacity of the mowing operation and/or the crop collecting sequence through a reduction of the number of necessary passes, various designs of cutters and crop pick-up attachments are known.

A crop collecting attachment with increased pass width for collecting two windrows in the same operation is thus known from Applicant's DK Patent Application No. 5590/86.

EP-A-0089257 and US-A-3911649 relate to mowers by which the windrows provided by consecutive passes may be bunched, said known machines having shield devices with pivotal shield plates by means of which the crop discharge opening may be displaced transversely to the direction of travel so that its position in relation to the centre line in the direction of travel is being varied between every pass which is always effected in the same direction as regards these prior art machines.

Applicant's DK Patent Application No. 2883/87 deals with a mower in which the bunching/combining of swaths provided by the consecutive field passes is obtained by means of a shielding device with a stationary discharge opening positioned assymmetrically in relation to the pass width of the mower, consecutive field run-overs being effected in opposite directions of travel.

EP-A-0 332 552 discloses a towed mower, i.e. a mower comprising a ground wheel at each side of the mowing means and a tongue for hitching to the rear of a tractor, which mower is in its operating position placed outside the track of the tractor and may be angularly adjusted to project obliquely rearwards in relation to a position perpendicular to the direction of travel and is provided with adjusting means for placing the discharged swath immediately adjacent a previously cut swath.

EP-A-0 406 961 discloses a combination of mowers comprising a mower mounted on the foremost carrying arms of a tractor and a rear mounted towed mower, the two mowers discharging harvested material centrally in their respective tracks.

DE-A-27 17 900 discloses a combination of mowers comprising a mower unit mounted on the foremost carrying arms of a tractor and a lift suspended mower mounted on the rearmost carrying arms of the tractor, said rear mounted mower comprising two mower units placed on either side of the track of the tractor and the front mounted mower unit, the three mower units discharging harvested material centrally in their respective tracks.

EP-A-0 342 700 discloses a mowing tractor with a front mower and a towed twin mower and discusses the connection between the tractor and the towed mower with the view of obtaining that the towed mower will follow the pivoting movements of the tractor so that the twin mowers are kept adjacent the track of the front mower. Three mowers discharges material they cut in their respective tracks.

Unlike said prior art designs in which the bunching of the harvested crop consists in combing the individual swaths resulting from the consecutive field passes, it is an object of the invention to provide a combination mower by which two or three windrows created by their individual mower unit are bunched at each pass, i.e. with a considerably increased mowing pass width in relation to conventional cutters.

For this purpose a combination of mowers for grass crops, comprising a mower unit with provisions for front mounting on the foremost carrying arms of a tractor and two mower units with provisions for rear mounting on the tractor arranged symmetrically in relation to the direction of travel on either side of the tractor, the latter units being in their operating position positioned outside the track width of the tractor with pass widths joining the pass width of the front mounted mower unit, the rear mounted mower units projecting obliquely rearwards in relation to a position perpendicular to the directional of travel and being provided with adjusting means for placing the discharged swath immediately adjacent the swath discharged by the front mounted mower unit for combining/bunching three swaths in one operation, said rear mounted mower units being connected with a common towing frame with ground wheels connected through a pull rod with the tractor in such a manner that the towing frame follows the pivoting movements of the tractor.

Prefered embodiments are referred to in claims 2-8.

The invention will now be explained in detail with reference to the schematical drawings, in which
Fig. 1 illustrates a tractor-driven mower,
Figs 2 and 3 are details of the rear mounted unit in the mower in Fig. 1 to increase and adjust the throwing length of the discharged swath, and
Fig. 4 illustrates an embodiment of the invention with three mower units.

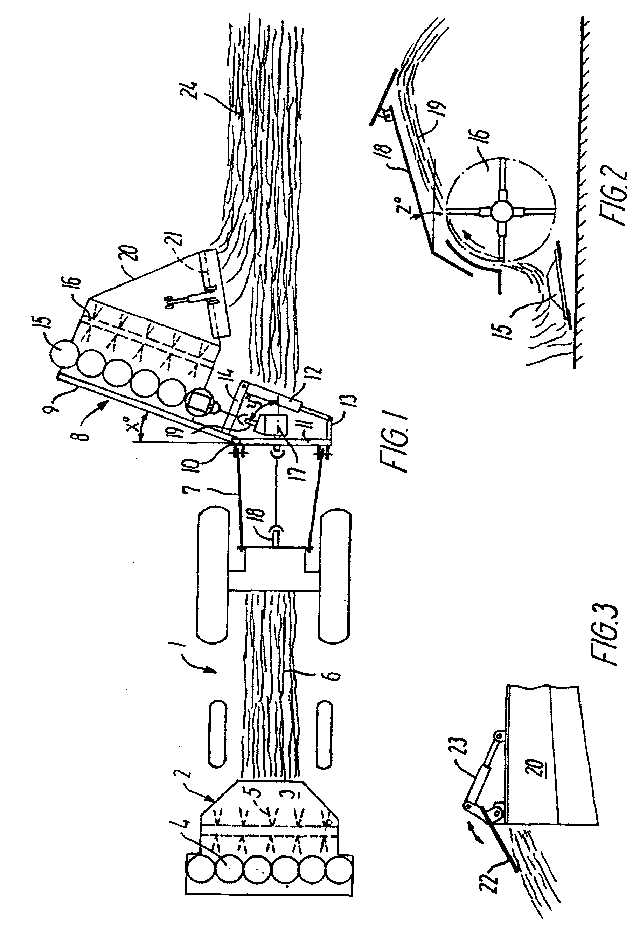

In Fig. 1 a mower unit 2 is shown suspended on the foremost carrying arms of a tractor 1, said mower unit having a discharged opening 3 through which the crop cut by the disc-shaped knives and processed by a conditioner roller 5 is discharged in a windrow 6 placed between the ground wheel of the tractor on the left and right side.

A supplementary mower unit 8 is suspended on the rearmost carrying arms 7 of the tractor, said unit in the illustrated working position being disposed outside the track width of the tractor wit a pass width joining the pass width of the front mounted unit 2.

The carrier beam 9 of the mower unit 8 is through a pivot joint 10 with vertical axis connected with a transverse beam 11 suspended on the carrying arms 7 and by means of a hydraulic cylinder 12 positioned between a bracket 13 at one end of the transverse beam 11 and a cantilever 14 from the carrier beam 9 the angle X between the carrier beam 9 and a position perpendicular to the direction of travel depending on the extension of the transverse beam 11 is varied to adjust the rearwards projecting inclined position of the unit 8 in relation to the tractor.

The knives 15 and the condition roller 16 of unit 8 are driven by mechanical or hydraulic transmission from a transmission unit 17 mounted on the transverse beam 11 and whose drive shaft is connected on gimbals with the rearmost power take-off 18 of the tractor.

The transmission unit 17 is designed as an angle drive so that its driven shaft 17 forms an angle Y with the direction of travel, approximately equal to 90° - X.

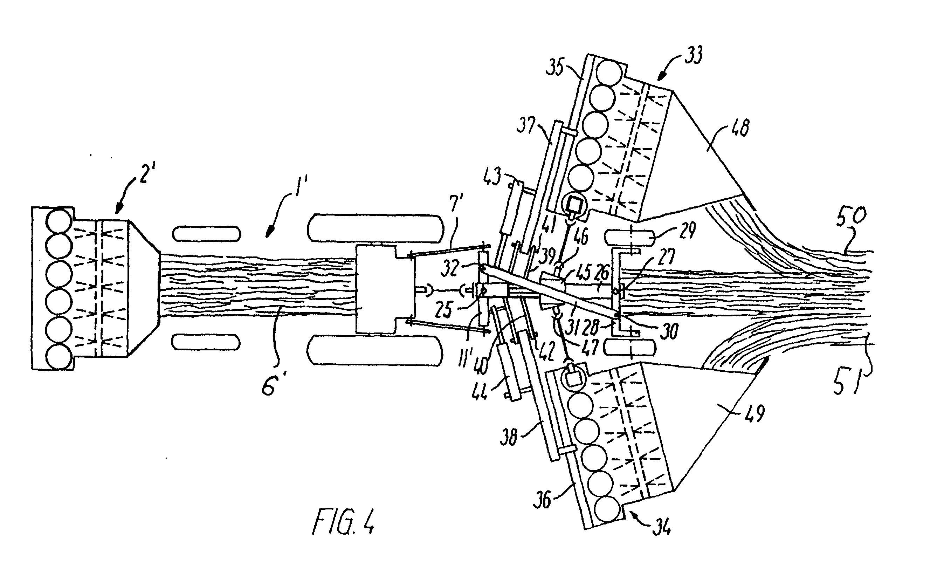

To enhance the throwing length of the swath discharged from the conditioner roller 16 the mower unit 8 is upwards defined by an upper restriction wall 18 which, as illustrated in Fig. 2, projects obliquely upwards and rearwards at an angle Z in relation to horizontal, thereby imparting to the discharged swath a rising towards the discharge opening.

To confine the mowing pass width the discharge opening is delimited to one side by a shielding wall 20 which from the end of the conditioner roller 16 remotest from the tractor projects obliquely inwards behind the mower unit 8 so that the plane of the discharge opening 21 forms a comparatively small angle with the direction of travel.

As illustrated in Fig. 3, the discharge opening is upwardly restricted by a pivotal flap 22, the angular position of which may be adjusted by means of a hydraulic activator 23 operated from driver's seat during travelling.

By adjustment of the angle X by means of the hydraulic cylinder 12 and the pivotal flap 22 by means of the hydraulic activator 23 the swath discharged from the unit 8 may, as illustrated in Fig. 1, be placed quite adjacent to the swath 6 from the front mounted unit 2.

In the embodiment in Fig. 4 a front mounted mower unit 2' is disposed on the foremost carrying arms of the tractor 1' in the same manner as in Fig. 1. On the rearmost carrying arms 7' of the tractor a transverse beam 11' is mounted which in a pivot joint 25 with vertical axis is connected with one end of a pull rod 26 which at its other end in a pivot link 27 with vertical axis is connected with a towing frame 28 with ground wheels 29. With the view of following the pivoting movements of the tractor the towing frame 28 is further through a pivot joint 30 connected with one end of a steering rod 31 which at its opposite end is connected through a pivot joint 32 with the transverse beam or yoke 11'.

Two mower units 33 and 34 obliquely backwards directed and symmetrically disposed in relation to the direction of travel are connected with the pull rod 26, the carrier beams 35 and 36 of said units being connected through connecting rods 37 and 38 with protruding brackets 39 and 40 from the pull rod 26 in pivot joints 41 and 42 with horizontal axis, thereby allowing each of the units to be swung by means of hydraulic activators 43 and 44 from the illustrated operating position to a substantially vertical conveyance position.

The driving power to the mower units 33 and 34 is transmitted through a common transmission unit 45 connected with the pull rod 26, its driving shafts 46 and 47 being as shown inclined in correspondence with the inclination of units 33 and 34.

To control the throwing length and the mowing pass width of the units 33 and 34 their discharge openings 48 and 49 may be laterally and upwardly defined in the same manner as described in the preceding. The swaths 50 and 51 discharged from the units 33 and 34 may thus be placed quite adjacent to and be combined with the swath 6' from the front mounted unit 2'.

## Claims

1. A combination of mowers for grass crops, comprising a mower unit (2') with provisions for front mounting on the foremost carrying arms of a tractor (1') and two mower units (33, 34) with provisions for rear mounting on the tractor (1') arranged symmetrically in relation to the direction of travel on either side of the tractor (1'), the latter units being in their operating position positioned outside the track width of the tractor (1') with pass widths joining the pass width of the front mounted mower unit (2'), the rear mounted mower units (33, 34) projecting obliquely rearwards in relation to a position perpendicular to the directional of travel and being provided with adjusting means for placing the discharged swath (24) immediately adjacent the swath (6) discharged by the front mounted mower unit (2') for combining/bunching three swaths in one operation, said rear mounted mower units (33, 34) being connected with a common towing frame (28) with ground wheels (29) connected through a pull rod (26) with the tractor (1') in such a manner that the towing frame (28) follows the pivoting movements of the tractor (1').

2. A mower according to claim 1, **characterized in that** the common towing frame (28) with ground wheels (29) is connected through the pull rod (26) and a steering rod (31) with a yoke (11') connected with the carrying arms (7') of the tractor (1').

3. A mower according to claims 1 or 2, **characterized in that** said rear mounted units (33, 34) are symmetrically pivotal in relation to the towing frame about vertical axes to adjust their inclined position in relation to the position perpendicular to the direction of travel.

4. A mower according to claims 1-3, **charac** **terized** in that said rear mounted units (33, 34) in relation to the towing frame (28) are symmetrically pivoted about horizontal axes (41, 42) for pivoting between their operating position and a conveyance position in which each of the units (33, 34) is substantially vertically oriented.

5. A mower according to claims 1-4, **characterized in that** the transmission shafts (46, 47) for the driven cutter means of the rear mounted units (33, 34) are coupled with a common transmission unit (45) connected with the pull rod (26).

6. A mower according to claims 1-5, **characterized in that** said adjusted means of the rear mounted mower unit (8) includes an upper restriction wall (18) projecting obliquely upwards and rearwards to increase the throwing length of the discharged swath.

7. A mower according to claim 6, **characterized in that** said restriction wall (18) at its rearmost edge is pivotally connected with an adjustable upper swath shield (22) for the positioning of the discharged swath (24).

8. A combination of mowers according to claims 1-7 wherein the rear mounted mowers (33, 34) is provided for connection with the rearmost carrying arms (7') of the tractor (1').

## Patentansprüche

1. Kombination von Mähmaschinen für Grasgut, umfassend eine Mäheinheit (2') mit Einrichtungen zum frontalen Montieren auf den vorderen Tragarmen eines Traktors (1'), und zwei Mäheinheiten (33, 34) mit Einrichtungen zum rückwärtigen Montieren auf dem Traktor (1'), die im Verhältnis zur Fahrtrichtung auf jeder Seite des Traktors (1') symmetrisch angeordnet sind, wobei sich letztere Einheiten in ihrer Betriebsstellung ausserhalb der Spurenbreite des Traktors (1') befinden, mit Arbeitsbreiten, die an die Arbeitsbreite der frontal montierten Mäheinheit (2') anschliessen, wobei die rückwärts montierten Mäheinheiten (33, 34) gegenüber einer zur Fahrtrichtung rechtwinkeligen Stellung schräg nach hinten hervorstehen und mit Justiermitteln zum Plazieren des ausgeworfenen Schwadens (24) in unmittelbarer Nähe des von der frontal montierten Mäheinheit (2') ausgeworfenen Schwadens (6) versehen sind, zum Kombinieren/Bündeln von drei Schwaden in einem Vorgang, welche rückwärts montierten Mäheinheiten (33, 34) mit einem gemeinsamen Zugrahmen (28) mit Bodenrädern (29) in Verbindung stehen, die über eine Zugstange (26) mit dem Traktor (1') derart verbunden sind, dass der Zugrahmen (28) den Drehbewegungen des Traktors (1') folgt.

2. Mähmaschine nach Anspruch 1, **dadurch gekennzeichnet, dass** der gemeinsame Zugrahmen (28) mit Bodenrädern (29) durch die Zugstange (26) und eine Lenkstange (31) mit einem an die Tragarme (7') des Traktors (1') angeschlossenen Joch (11') verbunden ist.

3. Mähmaschine nach Anspruch 1 oder 2, **dadurch gekennzeichnet, dass** erwähnte rückwärts montierte Einheiten (33, 34) gegenüber dem Zugrahmen um senkrechte Achsen symmetrisch schwenkbar sind, zum Einstellen ihrer Schrägstellung gegenüber der zur Fahrtrichtung rechtwinkeligen Stellung.

4. Mähmaschine nach Anspruch 1-3, **dadurch gekennzeichnet, dass** erwähnte rückwärts montierte Einheiten (33, 34) gegenüber dem Zugrahmen (28) um waagrechte Achsen (41, 42) symmetrisch schwenkbar sind, zum Schwenken zwischen ihrer Betriebsstellung und einer Transportstellung, in welcher jede der Einheiten (33, 34) im wesentlichen senkrecht ausgerichtet ist.

5. Mähmaschine nach Anspruch 1-4, **dadurch gekennzeichnet, dass** die Antriebswellen (46, 47) für die angetriebenen Schneidorgane der rückwärts montierten Einheiten (33, 34) an eine mit der Zugstange (26) angeschlossene gemeinsame Antriebseinheit (45) angekoppelt sind.

6. Mähmaschine nach Anspruch 1-5, **dadurch gekennzeichnet, dass** erwähnte Justiermittel der rückwärts montierten Mäheinheit (8) eine obere Begrenzungswand (18) umfassen, die zur Erweiterung der Wurflänge für den ausgeworfenen Schwaden schräg nach oben und nach hinten hervorsteht.

7. Mähmaschine nach Anspruch 6, **dadurch gekennzeichnet, dass** erwähnte Begrenzungswand (18) an ihrer rückwärtigen Kante für die Plazierung des ausgeworfenen Schwadens (24) mit einem einstellbaren oberen Schwadenblech (22) verbunden ist.

8. Kombination von Mähmaschinen nach Anspruch 1-7, nach welchen die rückwärts montierten Mäheinheiten (33, 34) zum Verbinden mit den hinteren Tragarmen (7') des Traktors (1') vorgesehen sind.

## Revendications

1. Combinaison de faucheuses de végétaux, comprenant une unité de faucheuse (2') avec des arrangements pour montage de devant sur les bras-supports de l'avant d'un tracteur (1') et deux unités de faucheuse (33, 34) avec des arrangements pour montage à l'arrière sur le tracteur (1') arrangées de manière symétrique par rapport à la direction de marche sur les deux côtés du tracteur (1'), les unités dernières nommées étant dans leur position de travail situées en dehors de la largeur de voie du tracteur (1') avec des coupes joignant la coupe de l'unité de faucheuse montée de devant (2'), les unités de faucheuse montées à l'arrière (33, 34) faisant saillie obliquement vers l'arrière par rapport à la position perpendiculaire à la direction de marche et étant pourvues de moyens de réglage pour placer l'andain déchargé (24) immédiatement avoisinant l'andain (6) déchargé par l'unité de faucheuse montée de devant (2') pour combiner/botteler trois andains dans une seule opération, lesdites unités de faucheuse montées à l'arrière (33, 34) étant reliées à un cadre de remorque commun (28) avec des roues porteuses (29) reliées par une tirette (26) au tracteur (1') d'une telle manière que le cadre de remorque (28) suit les mouvements de pivotement du tracteur (1').

2. Faucheuse selon la revendication 1, **caractérisée en ce que** le cadre de remorque commun (28) avec des roues porteuses (29) est relié par la tirette (26) et un levier de commande (31) avec un joug (11') relié aux bras-supports (7') du tracteur (1').

3. Faucheuse selon les revendications 1 ou 2, **caractérisée en ce que** lesdites unités montées à l'arrière (33, 34) peuvent pivoter de manière symétrique en liaison avec le cadre de remorque autour d'axes verticaux pour régler leur position inclinée par rapport à la position perpendiculaire à la direction de marche.

4. Faucheuse selon les revendications 1-3, **caractérisée en ce que** lesdites unités montées à l'arrière (33, 34) en liaison du cadre de remorque (28) sont pivotées de manière symétrique autour d'axes horizontaux (41, 42) pour pivoter entre leur position de travail et une position de transport dans laquelle chacune des unités (33, 34) est orientée essentiellement verticalement.

5. Faucheuse selon les revendications 1-4, **caractérisée en ce que** les arbres de transmission (46, 47) pour les moyens de coupe entraînés des unités montées à l'arrière (33, 34) sont couplés à une unité de transmission commune (45) reliée à la tirette (26).

6. Faucheuse selon les revendications 1-5, **caractérisée en ce que** ledit moyen réglé de l'unité de faucheuse montée à l'arrière (8) comprend une paroi supérieure de limitation (18) faisant saillie obliquement vers le haut et vers l'arrière pour élargir la longueur d'envoi de l'andain déchargé.

7. Faucheuse selon la revendication 6, **caractérisée en ce que** ladite paroi de limitation (18) à son bord postérieur est reliée à pivotement à une tôle d'andain supérieure réglable (22) pour le positionnement de l'andain déchargé (24).

8. Combinaison de faucheuses selon les revendications 1-7, dans laquelle les faucheuses montées à l'arrière (33, 34) sont pourvues pour liaison avec les bras-supports postérieurs (7') du tracteur (1').
